# EUROPÄISCHE PATENTANMELDUNG

(11) **EP 1 650 640 A2**
(43) Veröffentlichungstag der Anmeldung: **26.04.2006**
(21) Anmeldenummer: 05107294.0
(22) Anmeldetag: 08.08.2005
(51) Int. Cl.: G06F 3/02

(54) **System und Verfahren zum vereinfachten Aufrufen von Datenobjekten**

(30) Priorität: 09.08.2004 DE 102004038627
(71) Anmelder: Cherry GmbH, 91275 Auerbach (DE)
(72) Erfinder: Nagler, Walter, 91275, Auerbach (DE); Lochner, Matthias, 95463, Bindlach (DE); Lang, Alexander, 92711, Parkstein (DE); Knoll, Stefan, 91275, Auerbach (DE)
(74) Vertreter: Molnia, David

(57) **Zusammenfassung**

Die Erfindung bezieht sich auf ein System und ein Verfahren zum vereinfachten Aufrufen von Datenobjekten in einem Netzwerk mit einem Computer. Das Betätigen einer Taste einer Eingabevorrichtung wird von einem Eingabeerkennungprogramm erkannt und eine der betätigten Taste zugeordnete sekundäre Netzwerkadresse wird an ein Netzwerkzugriffsprogramm übermittelt. Dieses Programm lädt von der sekundären Netzwerkadresse ein Datenobjekt, das die Netzwerkadresse eines primären Datenobjekts enthält, auf das der Benutzer damit zugreifen kann.

## Beschreibung

Die Erfindung bezieht sich auf ein System und ein Verfahren zum vereinfachten Aufrufen von Datenobjekten mit einem Computer.

Adressen von Datenobjekten, die über Netzwerke zugänglich sind, haben oft eine zeitlich nur sehr begrenzte Gültigkeit. Dies gilt ganz besonders für über das Internet zugängliche Homepages, aber auch für Programme und andere Datenobjekte, die über das Internet zum Herunterladen angeboten werden. Die Adressen dieser Objekte können sich ändern, wenn Objekte hinzugefügt, geändert, verschoben oder gelöscht werden.

Weiterhin werden die Adressen solcher Datenobjekte auf Grund der beschränkten Verfügbarkeit prägnanter, alphanumerischer Adressen immer länger und komplizierter. Oft unterscheiden sich auch Adressen von Objekten, die nichts miteinander zu tun haben, nur in wenigen Zeichen.

Um letzteres Problem in den Griff zu bekommen, bieten viele Netzwerkzugriffsprogramme, insbesondere Browserprogramme für das World Wide Web (WWW), sogenannte Bookmark-Listen an, in denen die Adressen von Datenobjekten unter einem einprägsamen Namen gespeichert werden können und somit leichter wieder aufgerufen werden können.

Gerade umfangreiche Bookmark-Listen sind aber anfällig für das Problem der begrenzten zeitlichen Gültigkeit der in ihnen gespeicherten Adressen. Solche Listen auf aktuellem Stand zu halten, erfordert daher hohen zeitlichen Einsatz des Benutzers.

Eine weitere Möglichkeit der Vereinfachung des Zugriffs auf Netzwerkadressen stellen die seit einiger Zeit erhältlichen Computertastaturen dar, die neben den für eine Computertastatur üblichen Tasten weitere Zusatztasten haben, welche das Ausführen von Sonderfunktionen auf dem Computer bewirken, wenn sie betätigt werden. Einige dieser Zusatztasten bewirken dabei üblicherweise das Starten eines Browserprogramms und das Aufrufen einer Homepage mit diesem Programm, wobei die Adresse der Homepage entweder fest vorgegeben ist, oder vom Benutzer zuvor eingestellt werden kann.

Aber auch solche Computertastaturen haben das Problem, dass die Netzwerkadressen, auf die über sie zugegriffen wird, sich ändern können. Im Falle der fest vorgegeben Adressen verliert die Zusatztaste damit ihre Funktion, im Falle der einstellbaren Adressen kommt auf den Benutzer wiederum die Aufgabe zu, die Adressen auf dem aktuellen Stand zu halten.

Aus der EP 1 285 359 ist ein Verfahren bekannt, bei dem Netzwerkadressen von Datenobjekten auf einem zentralen Server gespeichert sind und dort aktuell gehalten werden können. Um auf diese Adressen zugreifen zu können, muss der Benutzer eine sekundäre Netzwerkadresse bestehend aus einem alphanumerischen Präfix (nämlich der Adresse des zentralen Servers) und einem numerischen Suffix eingeben. Weiterhin muss der Benutzer eine zusätzliche Eingabe tätigen, in Abhängigkeit von der die sekundäre Adresse auf eine primäre Adresse abgebildet wird. Schließlich kann dann auf das Datenobjekt mit der primären Adresse zugegriffen werden. Dieses Verfahren hat den Nachteil, dass sich der Benutzer die sekundären Adressen merken oder in einer Liste verwalten muss. Außerdem ist eine zusätzliche Eingabe erforderlich.

Der Erfindung liegt daher die Aufgabe zugrunde, ein System und ein Verfahren zu schaffen, das einem Benutzer einen vereinfachten Zugriff auf Datenobjekte ermöglicht, ohne dass der Benutzer sich um die Aktualität der Netzwerkadressen dieser Objekte kümmern muss.

Diese Aufgabe wird durch ein System und ein Verfahren zum vereinfachten Aufrufen von Datenobjekten gemäß der vorliegenden Erfindung gelöst.

Eine Netzwerkadresse in Sinne der vorliegenden Erfindung ist dabei eine numerische, alphanumerische oder anders codierte Zeichenfolge, die ein Datenobjekt in einem Netzwerk eindeutig identifiziert. Übliche Netzwerkadressen bestehen aus mehreren Teilen, z.B. kann die Netzwerkadresse eines Datenobjekts "http://www.ein-computer.de/pfad/zum/ datenobjekt.html" sein. Dabei gibt "http://" das Netzwerkprotokoll an, mit dem auf das Datenobjekt zugegriffen werden sollte. "www.ein-computer.de" ist die Netzwerkadresse des Computers, auf dem das Datenobjekt gespeichert ist. "/pfad/zum/" gibt den Speicherort in der Verzeichnisstruktur des Computers an und "datenobjekt.html" identifiziert das Datenobjekt. Eine Netzwerkadresse im Sinne der vorliegenden Erfindung kann zusätzlich auch Parameter aufweisen, die das Datenobjekt identifizieren. Als Beispiel ist "http://www.ein-computer.de/pfad/zum/datenobjekt.cgi*?file=datei.html" die Netzwerkadresse eines Datenobjekts mit dem Namen "datenobjekt.cgi" dem als Parameter die Zuordnung "file=datei.html" übergeben wird und das daraufhin den Benutzer zum Datenobjekt mit dem Namen "datei.html" weiterleitet. Ebenso kann ein Datenobjekt nicht nur durch einen, sondern auch durch mehrere Parameter identifiziert werden.

Ein System gemäß der vorliegenden Erfindung weist eine Eingabevorrichtung für einen Computer auf, die mindestens eine Taste aufweist. Das System weist weiterhin ein Eingabeerkennungsprogramm auf, das auf dem Computer ausgeführt werden kann und Mittel aufweist, um zu erkennen, welche Taste der Eingabevorrichtung betätigt wird, sowie Mittel, um eine Netzwerkadresse, die der betätigten Taste zugeordnet ist, an ein Netzwerkzugriffsprogramm (z.B. WWW-Browser, FTP-Programm oder ein anderes Netzwerkzugriffsprogramm) zu übermitteln. Das Netzwerkzugriffsprogramm greift auf die ihm übermittelte Netzwerkadresse zu und lädt von dort ein vorläufiges (sekundäres) Datenobjekt, das die Netzwerkadresse des endgültigen (primären) Datenobjekts, auf das der Benutzer zugreifen will, enthält.

Die Eingabevorrichtung kann z.B. eine Tastatur, eine Maus, ein Touchpad, ein Joystick, ein Gamepad, ein PDA oder ein anderes Eingabegerät, das üblicherweise Tasten aufweist und/oder mit zusätzlichen Tasten versehen ist, sein. Sie kann über ein Kabel und/oder kabellos mit dem Computer verbunden werden.

Sobald eine Taste der Eingabevorrichtung betätigt wird, empfängt das Eingabeerkennungsprogramm die vom entsprechenden Treiberprogramm erzeugte Nachricht, welche Taste betätigt wurde, und überprüft, ob dieser Taste eine Netzwerkadresse zugeordnet ist.

Wenn der Taste, die an der Eingabevorrichtung betätigt wird, keine Netzwerkadresse zugeordnet ist, so leitet das Eingabeerkennungsprogramm die Nachricht, dass diese Taste betätigt wurde, ohne Veränderung an das Betriebssystem des Computers weiter, so dass das Eingabeerkennungsprogramm für solche Tasten transparent erscheint.

Wenn der betätigten Taste aber eine Netzwerkadresse zugeordnet ist, übermittelt das Eingabeerkennungsprogramm diese Adresse an ein passendes Netzwerkzugriffsprogramm (z.B. WWW-Browser für http-Adressen, FTP-Programm für ftp-Adressen), wenn ein solches Programm bereits läuft. Wenn noch kein passendes Netzwerkzugriffsprogramm läuft, wird es vom Eingabeerkennungsprogramm gestartet und die Netzwerkadresse wird gleichzeitig oder nach dem Starten an das Netzwerkzugriffsprogramm übermittelt.

Das Eingabeerkennungsprogramm und das Netzwerkzugriffsprogramm können dabei auf dem gleichen Computer oder auf unterschiedlichen Computern, die miteinander kommunizieren können, laufen.

In einer bevorzugten Ausführungsform enthält das sekundäre Datenobjekt die Netzwerkadresse von genau einem primären Datenobjekt. Das sekundäre Datenobjekt kann dabei so gestaltet sein, dass das Netzwerkzugriffsprogramm automatisch zur Netzwerkadresse des primären Datenobjekts weitergeleitet wird. Dabei kann die Weiterleitung entweder ohne Benachrichtigung des Benutzers erfolgen, so dass dieser das Laden des sekundären Datenobjekts gar nicht bemerkt, oder das Netzwerkzugriffsprogramm kann anzeigen, dass die Weiterleitung zum primären Datenobjekt erfolgt. Das sekundäre Datenobjekt kann aber auch so gestaltet sein, dass das Netzwerkzugriffsprogramm die Netzwerkadresse des primären Datenobjekts anzeigt und die Weiterleitung erst erfolgt, wenn sie vom Benutzer bestätigt wird (z.B. durch Klicken mit der Maus auf die Adresse des primären Datenobjekts oder durch eine Eingabe auf der Tastatur).

In einer weiteren bevorzugten Ausführungsform enthält das sekundäre Datenobjekt die Netzwerkadressen von mehreren primären Datenobjekten. Dann werden die Adressen der primären Datenobjekte vom Netzwerkzugriffsprogramm angezeigt und der Benutzer muss auswählen, auf welches primäre Datenobjekt er zugreifen möchte (z.B. durch Klicken mit der Maus auf die Adresse oder durch eine Eingabe auf der Tastatur).

In einer weiteren bevorzugten Ausführungsform sind die im sekundären Datenobjekt enthaltenen Netzwerkadressen von primären Datenobjekten fest vorgegeben. Der Benutzer kann keinen Einfluss darauf nehmen, welche Netzwerkadressen er angezeigt bekommt oder zu welcher Netzwerkadresse er weitergeleitet wird.

In einer weiteren bevorzugten Ausführungsform kann der Benutzer mindestens eine der im sekundären Datenobjekt enthaltenen Netzwerkadressen von primären Datenobjekten verändern und damit an seine Bedürfnisse anpassen. Dazu kann der Benutzer entweder direkten Zugriff auf das sekundäre Datenobjekt haben, oder er kann veranlassen, dass die im sekundären Datenobjekt enthaltenen Netzwerkadressen automatisch oder durch eine Person, die Zugriff auf das sekundäre Datenobjekt hat, verändert werden. Letzteres kann z.B. durch eine Email- oder SMS-Benachrichtigung der berechtigten Person oder unter Verwendung eines sogenannten Formulars auf einer Homepage geschehen.

In einer weiteren bevorzugten Ausführungsform ist die Zuordnung der Netzwerkadressen der sekundären Datenobjekte (sekundären Netzwerkadressen) zu den Tasten der Eingabevorrichtung fest vorgegeben und kann vom Benutzer nicht verändert werden.

In einer weiteren bevorzugten Ausführungsform kann der Benutzer mindestens eine der Zuordnungen der sekundären Netzwerkadressen zu den Tasten der Eingabevorrichtung verändern. Diese Zuordnung kann der Benutzer z.B. direkt im Eingabeerkennungsprogramm einstellen, er kann sie in einer Konfigurationsdatei des Eingabeerkennungsprogramms vornehmen oder er kann eine andere Version des Eingabeerkennungsprogramms bestellen, die dann die von ihm erwünschten Zuordnungen verwendet.

In einer weiteren bevorzugten Ausführungsform ist die Eingabevorrichtung eine Tastatur. Diese kann zusätzliche Tasten aufweisen, denen sekundäre Netzwerkadressen zugeordnet sind, und/oder den auf üblichen Tastaturen vorkommenden Tasten können sekundäre Netzwerkadressen zugeordnet werden. Für letzteres lassen sich z.B. bevorzugt Tasten verwenden, die üblicherweise nur selten oder gar nicht verwendet werden, wie z.B. die Tasten "Druck", "Rollen" und "Pause" auf einer herkömmlichen Computertastatur.

Bei einem Verfahren zum vereinfachten Aufrufen von Datenobjekten gemäß der vorliegenden Erfindung wird in einem ersten Schritt eine Taste einer mit einem Computer verbundenen Eingabevorrichtung betätigt. In einem zweiten Schritt wird durch ein Eingabeerkennungsprogramm erkannt, welche Taste betätigt wurde. In einem dritten Schritt wird eine Netzwerkadresse, die der betätigten Taste zugeordnet ist, an ein Netzwerkzugriffsprogramm übermittelt. In einem vierten Schritt wird ein sekundäres Datenobjekt von der übermittelten Netzwerkadresse durch das Netzwerkzugriffsprogramm geladen. Dabei enthält das sekundäre Datenobjekt die Netzwerkadressen von mindestens einem primären Datenobjekt, die der Benutzer damit aufrufen kann.

In einer bevorzugten Ausführungsform des Verfahrens enthält das sekundäre Datenobjekt die Netzwerkadresse von genau einem primären Datenobjekt. Das sekundäre Datenobjekt kann dabei so gestaltet sein, dass das Netzwerkzugriffsprogramm automatisch zur Netzwerkadresse des primären Datenobjekts weitergeleitet wird. Dabei kann die Weiterleitung entweder ohne Benachrichtigung des Benutzers erfolgen, so dass dieser das Laden des sekundären Datenobjekts gar nicht bemerkt, oder das Netzwerkzugriffsprogramm kann anzeigen, dass die Weiterleitung zum primären Datenobjekt erfolgt. Das sekundäre Datenobjekt kann aber auch so gestaltet sein, dass das Netzwerkzugriffsprogramm die Netzwerkadresse des primären Datenobjekts anzeigt und die Weiterleitung erst erfolgt, wenn sie vom Benutzer bestätigt wird (z.B. durch Klicken mit der Maus auf die Adresse des primären Datenobjekts oder durch eine Eingabe auf der Tastatur).

In einer weiteren bevorzugten Ausführungsform des Verfahrens enthält das sekundäre Datenobjekt die Netzwerkadressen von mehreren primären Datenobjekten. Dann werden die Adressen der primären Datenobjekte vom Netzwerkzugriffsprogramm angezeigt und der Benutzer muss auswählen, auf welches primäre Datenobjekt er zugreifen möchte (z.B. durch Klicken mit der Maus auf die Adresse oder durch eine Eingabe auf der Tastatur).

In einer weiteren bevorzugten Ausführungsform des Verfahrens sind die im sekundären Datenobjekt enthaltenen Netzwerkadressen von primären Datenobjekten fest vorgegeben. Der Benutzer kann keinen Einfluss darauf nehmen, welche Netzwerkadressen er angezeigt bekommt oder zu welcher Netzwerkadresse er weitergeleitet wird.

In einer weiteren bevorzugten Ausführungsform des Verfahrens kann der Benutzer mindestens eine der im sekundären Datenobjekt enthaltenen Netzwerkadressen von primären Datenobjekten verändern und damit an seine Bedürfnisse anpassen. Dazu kann der Benutzer entweder direkten Zugriff auf das sekundäre Datenobjekt haben, oder er kann veranlassen, dass die im sekundären Datenobjekt enthaltenen Netzwerkadressen automatisch oder durch eine Person, die Zugriff auf das sekundäre Datenobjekt hat, verändert werden. Letzteres kann z.B. durch eine Email- oder SMS-Benachrichtigung der berechtigten Person oder unter Verwendung eines sogenannten Formulars auf einer Homepage geschehen.

In einer weiteren bevorzugten Ausführungsform des Verfahrens ist die Zuordnung der Netzwerkadressen der sekundären Datenobjekte (sekundären Netzwerkadressen) zu den Tasten der Eingabevorrichtung fest vorgegeben und kann vom Benutzer nicht verändert werden.

In einer weiteren bevorzugten Ausführungsform des Verfahrens kann der Benutzer mindestens eine der Zuordnungen der sekundären Netzwerkadressen zu den Tasten der Eingabevorrichtung verändern. Diese Zuordnung kann der Benutzer z.B. direkt im Eingabeerkennungsprogramm einstellen, er kann sie in einer Konfigurationsdatei des Eingabeerkennungsprogramms vornehmen oder er kann eine andere Version des Eingabeerkennungsprogramms bestellen, die dann die von ihm erwünschten Zuordnungen verwendet.

In einer weiteren bevorzugten Ausführungsform des Verfahrens ist die Eingabevorrichtung eine Tastatur. Diese kann zusätzliche Tasten aufweisen, denen sekundäre Netzwerkadressen zugeordnet sind, und/oder den auf üblichen Tastaturen vorkommenden Tasten können sekundäre Netzwerkadressen zugeordnet werden. Für letzteres lassen sich z.B. bevorzugt Tasten verwenden, die üblicherweise nur selten oder gar nicht verwendet werden, wie z.B. die Tasten "Druck", "Rollen" und "Pause" auf einer herkömmlichen Computertastatur.

Anhand der Zeichnungen wird die Erfindung nachstehend eingehend erläutert. Es zeigt:
Fig. 1 ein Ausführungsbeispiel einer Tastatur, die als Eingabevorrichtung verwendet werden kann; und
Fig. 2 schematisch den Ablauf einer bevorzugten Ausführungsform des beanspruchten Verfahrens.

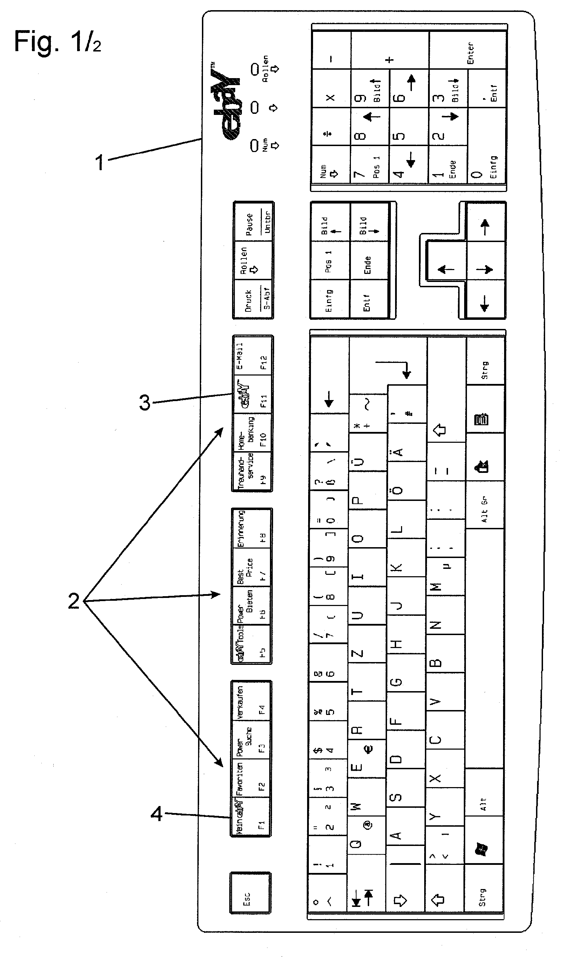

Die in Fig. 1 dargestellte Tastatur (1) ist eine Computertastatur, die in Verbindung mit dem System oder dem Verfahren gemäß der vorliegenden Erfindung zum vereinfachten Zugriff auf Webseiten der Internet-Auktionsplattform ebay verwendet werden kann (ebay ist eine eingetragene Marke der Firma eBay Inc.).

Die Tastatur (1) hat die für Computertastaturen üblichen 105 Tasten, die auch alle in der üblichen Weise verwendet werden können. Zusätzlich sind die zwölf sogenannten Funktionstasten F1 - F12 (2) unter anderem mit dem Namen von Zusatzfunktionen beschriftet, die im Zusammenhang mit ebay ausgeführt werden können. Dazu ist es möglich, diesen Tasten im Eingabeerkennungsprogramm Netzwerkadressen zuzuordnen, von denen Datenobjekte, in diesem Falle Webseiten, geladen werden, die den Benutzer auf die entsprechenden Webseiten von ebay weiterleiten. Allen anderen Tasten werden dabei keine Netzwerkadressen zugeordnet, so dass diese Tasten ihre übliche Funktion behalten.

Betätigt der Benutzer z.B. die Taste F11/"ebay" (3), so übermittelt das Eingabeerkennungsprogramm die zugeordnete sekundäre Netzwerkadresse, z.B. "http://redirect.cherry.de/f11.html", an ein Browserprogramm. Dieses lädt dann unter Verwendung des HTTP-Protokolls vom Computer mit der Netzwerkadresse "redirect.cherry.de" die HTML-Datei "f11.html" (sekundäres Datenobjekt). Diese Datei kann so gestaltet sein, dass das Browserprogramm sofort zur Webseite mit der primären Netzwerkadresse "http://www.ebay.de/" weitergeleitet wird und diese darstellt (primäres Datenobjekt).

Betätigt der Benutzer z.B. die Taste F1/"Mein ebay" (4), so übermittelt das Eingabeerkennungsprogramm die zugeordnete sekundäre Netzwerkadresse, z.B. "http://redirect.cherry.de/fl.cgi?user=ebayName", an das Browserprogramm. Dabei ist "ebayName" der Name, unter dem der Benutzer bei ebay angemeldet ist und der im Eingabeerkennungsprogramm oder in dessen Konfigurationsdatei eingetragen werden kann. Dieser Name ist als Parameter Bestandteil der sekundären Netzwerkadresse, die der Taste F1/"Mein ebay" (4) zugeordnet ist, und wird dadurch dem Datenobjekt "f1.cgi" übergeben, wodurch das Browserprogramm zum sekundären Datenobjekt "f1_ebayName.html " weitergeleitet wird und dieses lädt. Diese HTML-Datei kann so gestaltet sein, dass das Browserprogramm sofort zum primären Datenobjekt, nämlich zur "Mein ebay"-Webseite des Benutzers weitergeleitet wird und diese darstellt.

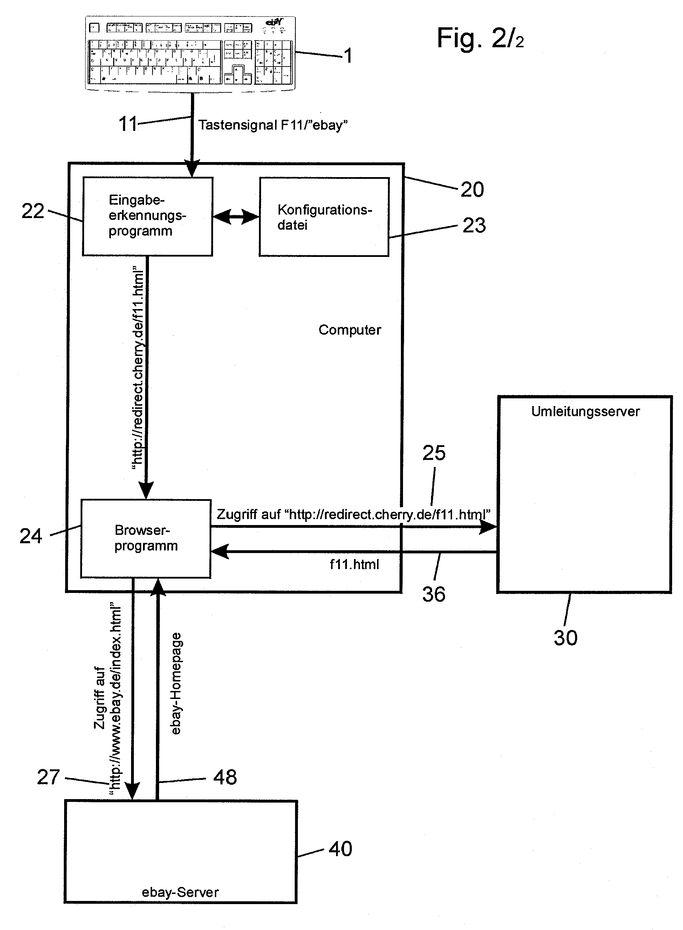

In Fig. 2 ist schematisch der Ablauf des Verfahrens dargestellt, wenn der Benutzer auf der in Fig. 1 gezeigten Tastatur (1) die Taste F11/"ebay" betätigt. Das Signal (11), dass die Taste F11/"ebay" betätigt wurde, wird vom Eingabeerkennungsprogramm (22) empfangen. Dieses ermittelt anhand seiner Konfigurationsdatei (23) die dieser Taste zugeordnete sekundäre Netzwerkadresse "http://redirect.cherry.de/f11.html". Diese Adresse wird vom Eingabeerkennungsprogramm an das Netzwerkzugriffsprogramm, in diesem Falle ein Browserprogramm (24) für das WWW, übermittelt.

Das Browserprogramm (24) greift auf die sekundäre Netzwerkadresse zu (25) und lädt dadurch vom sogenannten Umleitungsserver (30) das sekundäre Datenobjekt (26), in diesem Fall eine HTML-Datei mit dem Namen "f11.html". Diese kann so beschaffen sein, dass das Browserprogramm (24) automatisch auf die im sekundären Datenobjekt enthaltene primäre Netzwerkadresse "http://www.ebay.de/index.html" zugreift (27) und dadurch vom ebay-Server (40) mit der Netzwerkadresse "www.ebay.de" das primäre Datenobjekt mit dem Namen "index.html", d.h. die Homepage von ebay, lädt (48) und darstellt.

## Patentansprüche

1. System zur Verwendung mit einem Computer zum vereinfachten Aufrufen von primären Datenobjekten aufweisend
(a) eine Eingabevorrichtung, die mit dem Computer verbunden werden kann und mindestens eine Taste aufweist, und
(b) ein Eingabeerkennungsprogramm, das auf dem Computer ausgeführt werden kann und aufweist
i.) Mittel zum Erkennen, welche Taste der Eingabevorrichtung betätigt wird, und
ii.) Mittel zum Übermitteln einer Netzwerkadresse, die der betätigten Taste zugeordnet ist, an ein Netzwerkzugriffsprogramm,
**dadurch gekennzeichnet, dass**
das Netzwerkzugriffsprogramm auf die übermittelte Netzwerkadresse zugreift und von dort ein sekundäres Datenobjekt lädt, das die Netzwerkadressen von mindestens einem primären Datenobjekt enthält.

2. System nach Anspruch 1, wobei das sekundäre Datenobjekt die Netzwerkadresse von genau einem primären Datenobjekt enthält.

3. System nach Anspruch 2, wobei das Netzwerkzugriffsprogramm nach dem Laden des sekundären Datenobjekts automatisch zur Netzwerkadresse des primären Datenobjekts weitergeleitet wird.

4. System nach Anspruch 1, wobei das sekundäre Datenobjekt die Netzwerkadressen von mehr als einem primären Datenobjekt enthält.

5. System nach einem der vorangegangenen Ansprüche, wobei die im sekundären Datenobjekt enthaltenen Netzwerkadressen von primären Datenobjekten fest vorgegeben sind.

6. System nach einem Ansprüche 1 - 4, wobei mindestens eine der im sekundären Datenobjekt enthaltenen Netzwerkadressen von primären Datenobjekten vom Benutzer verändert werden kann.

7. System nach einem der vorangegangenen Ansprüche, wobei die Zuordnung der sekundären Netzwerkadressen zu den Tasten der Eingabevorrichtung fest vorgegeben ist.

8. System nach einem der Ansprüche 1 - 6, wobei die Zuordnung von mindestens einer der sekundären Netzwerkadressen zu den Tasten der Eingabevorrichtung vom Benutzer geändert werden kann.

9. System nach einem der vorangegangenen Ansprüche, wobei die Eingabevorrichtung eine Tastatur ist.

10. Verfahren zum vereinfachten Aufrufen von primären Datenobjekten mit einem Computer aufweisend die Schritte
(a) Betätigen einer Taste einer mit dem Computer verbundenen Eingabevorrichtung;
(b) Erkennen, welche Taste betätigt wurde, durch ein Eingabeerkennungsprogramm;
(c) Übermitteln einer Netzwerkadresse, die der betätigten Taste zugeordnet ist, an ein Netzwerkzugriffsprogramm; und
(d) Laden eines sekundären Datenobjekts von der übermittelten Netzwerkadresse durch das Netzwerkzugriffsprogramm
**dadurch gekennzeichnet, dass**
das sekundäre Datenobjekt die Netzwerkadressen von mindestens einem primären Datenobjekt enthält.

11. Verfahren nach Anspruch 10, wobei das sekundäre Datenobjekt die Netzwerkadresse von genau einem primären Datenobjekt enthält.

12. Verfahren nach Anspruch 11, wobei das Netzwerkzugriffsprogramm nach dem Laden des sekundären Datenobjekts automatisch zur Netzwerkadresse des primären Datenobjekts weitergeleitet wird.

13. Verfahren nach Anspruch 10, wobei das sekundäre Datenobjekt die Netzwerkadressen von mehr als einem primären Datenobjekt enthält.

14. Verfahren nach einem der Ansprüche 10 - 13, wobei die im sekundären Datenobjekt enthaltenen Netzwerkadressen von primären Datenobjekten fest vorgegeben sind.

15. Verfahren nach einem der Ansprüche 10 - 13, wobei mindestens eine der im sekundären Datenobjekt enthaltenen Netzwerkadressen von primären Datenobjekten vom Benutzer verändert werden kann.

16. Verfahren nach einem der Ansprüche 10 *-* 15, wobei die Zuordnung der sekundären Netzwerkadressen zu den Tasten der Eingabevorrichtung fest vorgegeben ist.

17. Verfahren nach einem der Ansprüche 10 - 15, wobei die Zuordnung von mindestens einer der sekundären Netzwerkadressen zu den Tasten der Eingabevorrichtung vom Benutzer geändert werden kann.

18. Verfahren nach einem der Ansprüche 10 - 17, wobei die Eingabevorrichtung eine Tastatur ist.
